# EUROPÄISCHE PATENTANMELDUNG

(11) **EP 2 266 776 A1**
(43) Veröffentlichungstag der Anmeldung: **29.12.2010**
(21) Anmeldenummer: 10006484.9
(22) Anmeldetag: 22.06.2010
(51) Int. Cl.: B29C 45/56

(54) **Verfahren und Vorrichtung zur Herstellung von dickwandigen Kunststoff-Bauteilen, insbesondere optischen Bauteilen**

(30) Priorität: 27.06.2009 DE 102009030782
(71) Anmelder: Bayer MaterialScience AG, 51368 Leverkusen (DE)
(72) Erfinder: Protte, Rainer, 41542 Dormagen (DE); Klinkenberg, Christoph, 50667 Köln (DE)

(57) **Zusammenfassung**

Die Erfindung betrifft ein Verfahren zur Herstellung von Kunststoff-Bauteilen, insbesondere von optischen Linsen oder Lichtleitern, bei dem Kunststoffschmelze über einen Anguss (3, 4, 6, 8) in eine das Bauteil formende Kavität (1) eines Formwerkzeuges eingespritzt und zusätzliche Kunststoffschmelze zur Kompensation einer abkühlungsbedingten Volumenkontraktion der eingespritzten Kunststoffschmelze in die Kavität (1) nachgedrückt wird. Das Verfahren ist **dadurch gekennzeichnet, dass** die im Anguss (3, 4, 6, 8) befindliche Kunststoffschmelze mittels im Bereich des Anguss eingebrachter Energie solange fließfähig gehalten wird, bis die schmelzflüssige Seele des Kunststoff-Bauteils beim Nachdrücken von Kunststoffschmelze zur Kompensation der abkühlungsbedingten Volumenkontraktion erstarrt ist. Ferner betrifft die Erfindung eine Vorrichtung zur Durchführung des Verfahrens.

## Beschreibung

Die Erfindung betrifft ein Verfahren zur Herstellung von Kunststoff-Bauteilen, insbesondere von optischen Linsen, Lichtleitern und anderen optischen Bauteilen, bei dem Kunststoffschmelze über einen Anguss in eine das Bauteil formende Kavität eines Formwerkzeuges eingespritzt und zusätzliche Kunststoffschmelze zur Kompensation einer abkühlungsbedingten Volumenkontraktion der eingespritzten Kunststoffschmelze in die Kavität nachgedrückt wird. Der Anschnitt kann dabei an einer schmalen Seitenwand des Bauteils liegen. Ferner betrifft die Erfindung eine Vorrichtung zum Spritzgießen oder Spritzprägen solcher Kunststoff Bauteile, mit einer Kavität zur Formung des herzustellenden Kunststoff-Bauteils und einer Zufuhreinrichtung, beispielsweise einer Spritzgießschnecke, zur Zufuhr von Kunststoffschmelze über einen Anguss in die Kavität.

Insbesondere beim Spritzgießen dickwandiger Kunststoff-Bauteile, wie etwa optischer Bauteile, an die hinsichtlich der Geometrietreue sehr hohe Anforderungen gestellt werden, ist es erforderlich, die üblicherweise auftretende Formteilschwindung in der Kavität durch Nachdrücken von Kunststoffschmelze wirkungsvoll zu kompensieren. Verschließt sich dabei der Anguss bzw. der angussnahe Bereich am Bauteil durch Erstarren der Kunststoffschmelze (Siegelzeit), bevor die Volumenkontraktion des Bauteils während der Abkühlphase vollständig abgeschlossen ist, kann dies zu Einfallstellen, Lunkern oder Verzug führen. Um dies zu verhindern, wird der Anguss in seinem Querschnitt in herkömmlicher Weise möglichst groß dimensioniert. Bei der Abtrennung des Angusses vom Bauteil sind relativ große bzw. dicke Angussstellen jedoch andererseits nachteilig, weil dabei qualitätsmindernde Materialausbrüche bzw. Trennspuren auftreten können. Auch können dabei Verschmutzungen durch Staub, Späne oder ähnlichem auftreten, was etwa bei häufig geforderten Sauber- oder Reinraumbedingungen inakzeptabel ist. Oftmals sind große Anschnitte gar nicht möglich, weil das Bauteil keinen Platz hierfür bietet. Dies gilt insbesondere für Linsen und Lichtleiter, da bei derartigen Bauteilen nur wenige Flächen nicht optisch genutzt werden. Bei solchen Bauteilen ist der Anguss üblicherweise an der Seitenwand positioniert und sein minimaler Durchmesser beträgt ca. 2/3 der maximalen Wanddicke. Zudem fallen bei optischen Bauteilen auf Grund des transparenten Materials oft aus ästhetischen Gründen viele für die Platzierung eines Anschnitts theoretisch nutzbare Bereiche weg. Ferner verursachen dicke Angüsse in der Regel zusätzliche Kosten durch eine Nachbearbeitung der Anschnittstelle (Trennstelle). Zudem verursachen relativ große bzw. dicke Angüsse einen erhöhten Materialverbrauch.

Es ist bekannt, Spritzgießwerkzeuge zur Herstellung von Kunststoffgegenständen mit Ultraschall-Schwingungen zu beaufschlagen. Beispielsweise ist in der Veröffentlichung "Vielseitig anwendbarer Ultraschall" von Peter Bloss u.a., Kunststoffe 06/2006, Carl Hanser Verlag, München, ein positiver Nutzen für die Abformung von Mikro-Strukturen und die Füllung sehr kleiner Kavitäten beschrieben. Basis dieser Ideen ist immer die Erhöhung der Fließfähigkeit der Kunststoffschmelze. Die im Folgenden beschriebene Erfindung basiert zum einen nicht auf der Erhöhung der Fließfähigkeit der Schmelze, also der Senkung der Viskosität, sondern auf einer gezielten Vermeidung des Erstarrens. Zum anderen findet die Einleitung des Ultraschalls nicht nur in der Füllphase statt, sondern auch in der Nachdruckphase.

In der US 6,464,485 B1 ist ein mit einer Sonotrode versehenes Spritzgießwerkzeug beschrieben, das der Herstellung einer optischen Scheibe, z.B. einer CD-ROM dient. Das Spritzgießwerkzeug umfasst zwei Werkzeughälften, die zusammen eine die optische Scheibe formende Kavität begrenzen, wobei auf dem Boden einer der beiden Werkzeughälften eine Prägescheibe zur Formung von Strukturelementen angeordnet ist. An der anderen Werkzeughälfte ist zentrisch in Bezug auf die scheibenförmige Kavität der Anschnitt für die Kunststoffschmelze angeordnet, während die Einkopplung der Ultraschall-Schwingungen über die gegenüberliegende Werkzeughälfte, im Wesentlichen ungerichtet, erfolgt. In beiden Werkzeughälften sind außerhalb der Kavität kreisringförmige Schlitze bzw. mehrere auf einem Kreisring angeordnete Schlitze ausgebildet, um die Amplitude der Ultraschall-Schwingungen in radialer Richtung der Kavität zu minimieren.

Der vorliegenden Erfindung liegt die Aufgabe zugrunde, ein Verfahren sowie eine Vorrichtung anzugeben, mit dem/der sich auf kostengünstige Weise relativ dickwandige Kunststoff-Bauteile, insbesondere optische Linsen und Lichtleiter, in sehr hoher Geometrietreue durch Spritzgießen bzw. Spritzprägen herstellen lassen.

Gelöst wird diese Aufgabe durch das erfindungsgemäße Verfahren mit den Merkmalen des Anspruchs 1 und durch die erfindungsgemäße Vorrichtung mit den Merkmalen des Anspruchs 8.

Bei dem erfindungsgemäßen Verfahren wird Kunststoffschmelze in eine das Bauteil formende Kavität eines Spritzgieß- bzw. Spritzprägewerkzeuges eingespritzt. Das Verfahren ist dadurch gekennzeichnet, dass die im Anguss befindliche Kunststoffschmelze durch im Bereich des Anguss eingebrachte Energie, insbesondere mittels auf den Anguss gerichteter Ultraschallwellenaussendung, solange fließfähig gehalten wird, bis die schmelzflüssige Seele des Kunststoff-Bauteils erstarrt ist.

Unter dem Begriff Anguss werden im vorliegenden Kontext gegebenenfalls auch die sogenannte Anschnittstelle (Anschnitt) zwischen einem Anguss- bzw. Kaltkanalverteiler und der das Kunststoff-Bauteil formenden Kavität sowie Engstellen am Bauteil selber verstanden.

Mit dem erfindungsgemäßen Verfahren lassen sich insbesondere optische Bauteile aus Kunststoff in sehr hoher Geometrietreue kostengünstig herstellen. Denn mit dem erfindungsgemäßen Verfahren lässt sich die üblicherweise auftretende Formteilschwindung in der Kavität durch Nachdrücken von Kunststoffschmelze auch bei relativ kleiner Querschnittsfläche des Angusses wirksam kompensieren, so dass Kunststoffbauteile in sehr hoher Qualität erzielt werden. Durch eine Verkleinerung des Durchmessers bzw. der Querschnittsfläche des Angusses bzw. Anschnittes können qualitätsmindernde Materialausbrüche bzw. Trennspuren deutlich vermindert werden. Eine Nachbearbeitung der Anschnittstelle ist dann meist nicht mehr erforderlich. Die Verkleinerung des Angusses bzw. Anschnittes bietet zudem die Möglichkeit, den Anguss bzw. Anschnitt in einen Bereich des herzustellenden Bauteils zu legen, der hierfür bislang aus Platzgründen nicht genutzt werden konnte. So kann der Anguss bzw. Anschnitt nun beispielsweise an eine Schmalseite bzw. Engstelle des Bauteils vorgesehen werden.

Eine Minimierung des Durchmessers bzw. der Querschnittsfläche des Angusses erhöht zwar normalerweise die Tendenz, dass der Anguss einfriert bevor das herzustellende Bauteil erstarrt ist, so dass es unter anderem zu schwindungsbedingten Lunkern und Einfallstellen kommen kann; durch die erfindungsgemäße Einbringung von Energie in den Anguss, z.B. durch Aussendung gerichteter Ultraschallwellen auf den Anguss, wird die Kunststoffschmelze dort jedoch ausreichend lange fließfähig gehalten, so dass trotz eines vorzugsweise verhältnismäßig kleinen bzw. dünnen Angusses eine Nachführung von Kunststoffschmelze zur Kompensation der kunststofftypischen abkühlungsbedingten Volumenschwindung möglichst lange gewährleistet ist. Des Weiteren verringert die Verkleinerung des Durchmessers bzw. der Querschnittsfläche des Angusses den Verbrauch von Kunststoff.

Die Einbringung von Energie in den Anguss kann alternativ zur Einbringung mittels einer Ultraschall-Sonotrode auch über Einbringung von Wärme mittels einer Heizeinrichtung und/oder durch eine Kombination von Ultraschall- und Wärmeeinbringung erfolgen.

Das erfindungsgemäße Verfahren lässt sich vorteilhaft zum Spritzgießen bzw. Spritzprägen von dickwandigen Bauteilen, zum Beispiel von optischen Bauteilen mit einer Wanddicke im Bereich von 10 bis 20 mm, aber auch mit anderen Wanddicken, anwenden. Die dabei verwendete Kunststoffschmelze ist aus transparentem bzw. transluzentem Kunststoff gebildet. Grundsätzlich können bei dem erfindungsgemäßen Verfahren alle Kunststoffe, die für optische Bauteile genutzt werden können, zur Bildung der Kunststoffschmelze verwendet werden. Die verwendete Kunststoffschmelze besteht vorzugsweise aus Polycarbonat, Copolycarbonat, thermoplastischem Polyurethan, Cycloolefin-Copolymer, Cycloolefin-Polymer, Polyamid, Styrol-Acrylnitril-Kunststoff, Polystyrol, Poly-N-Methylmethacrylimid, Polymethacryl-Säureester, Polymethacrylmethylimid, oder Polyacrylat, insbesondere Polymethylmethacrylat, und/oder Blends dieser Kunststoffe. Besonders bevorzugt sind Polycarbonat, Copolycarbonat, thermoplastisches Polyurethan sowie Blends, die diese Kunststoffe enthalten.

Eine vorteilhafte Ausgestaltung des erfindungsgemäßen Verfahrens ist **dadurch gekennzeichnet, dass** der aufgrund der Herstellung des Kunststoff-Bauteils im Anguss befindliche Kunststoff vor dem Einspritzen von Kunststoffschmelze zur Herstellung eines weiteren Kunststoff-Bauteils aus dem Anguss entfernt worden ist. Die beim vorherigen Schuss mit Ultraschall und/oder Wärme beaufschlagte Kunststoffschmelze wird somit aus dem Anguss entformt, so dass sie beim nachfolgenden Schuss nicht in die Kavität gespritzt wird. Hierdurch kann eine besonders hohe Qualität der hergestellten Kunststoff-Bauteile gewährleistet werden; Auswirkungen des Ultraschalls und/oder der Wärme auf die Schmelze wirken sich nicht nachteilig auf die Bauteilqualität aus. Besonders gegenüber Werkzeugkonzepten mit einem Heißkanal ist dies ein Vorteil, da dort besonders bei langen Zykluszeiten die Schmelze zum Abbauen neigt. Des Weiteren besteht bei Heißkanalsystemen immer die Gefahr von toten Ecken, in denen sich Material sammeln und schwarze Stippen und ähnliches bilden kann.

Die erfindungsgemäße Vorrichtung zum Spritzgießen oder Spritzprägen von Kunststoff-Bauteilen, insbesondere optischen Linsen oder Lichtleitern, umfasst eine Kavität zur Formung des herzustellenden Kunststoff-Bauteils und eine Zufuhreinrichtung, beispielsweise eine Spritzgießschnecke, zur Zufuhr von Kunststoffschmelze über einen Anguss in die Kavität. Die Vorrichtung ist **dadurch gekennzeichnet, dass** dem Anguss mindestens eine Sonotrode und/oder eine Heizeinrichtung zugeordnet ist, die auf den Anguss gerichtete Ultraschallwellen bzw. Wärmeenergie aussendet, so dass die im Anguss befindliche Kunststoffschmelze solange fließfähig haltbar ist, bis die schmelzflüssige Seele des Kunststoff-Bauteils beim Nachdrücken von Kunststoffschmelze zur Kompensation einer abkühlungsbedingten Volumenkontraktion von in der Kavität befindlicher Kunststoffschmelze erstarrt ist.

In einer Ausführungsform enthält die Vorrichtung eine aktivierende Steuerung, die mittels eines Sensors die Fließfähigkeit der Schmelze erfasst, und/oder die ein einstellbares Zeitglied, mittels dem eine Aktivierungsdauer der Sonotrode bzw. der Heizeinrichtung vorgebbar ist, umfasst.

Bei der Heizeinrichtung handelt es sich beispielsweise um eine elektrische Heizung, z.B. um eine Induktions- und/oder Keramikheizung, und/oder um eine Laserheizung und/oder eine Widerstandsheizung.

Insbesondere lassen sich über das erfindungsgemäße Verfahren dickwandige Kunststoff-Bauteile, wie z.B. optische Linsen mit konstanten oder regional unterschiedlichen Wanddicken, herstellen.

Durch das erfindungsgemäße Verfahren ist es möglich, Angussdurchmesser von weniger als 50 %, insbesondere weniger als 35 %, und in besonderen Ausführungsbeispielen sogar weniger als 20 % zu realisieren. Damit lässt sich der bei solchen Bauteilen übliche, durch den Stand der Technik vorgegebene Angussdurchmesser von ca. 2/3 der maximalen Wanddicke deutlich reduzieren. Bevorzugte und vorteilhafte Ausgestaltungen des erfindungsgemäßen Verfahrens sowie der erfindungsgemäßen Vorrichtung sind in den Unteransprüchen angegeben.

Nachfolgend wird die Erfindung anhand einer ein Ausführungsbeispiel darstellenden Zeichnung näher erläutert. Es zeigen:

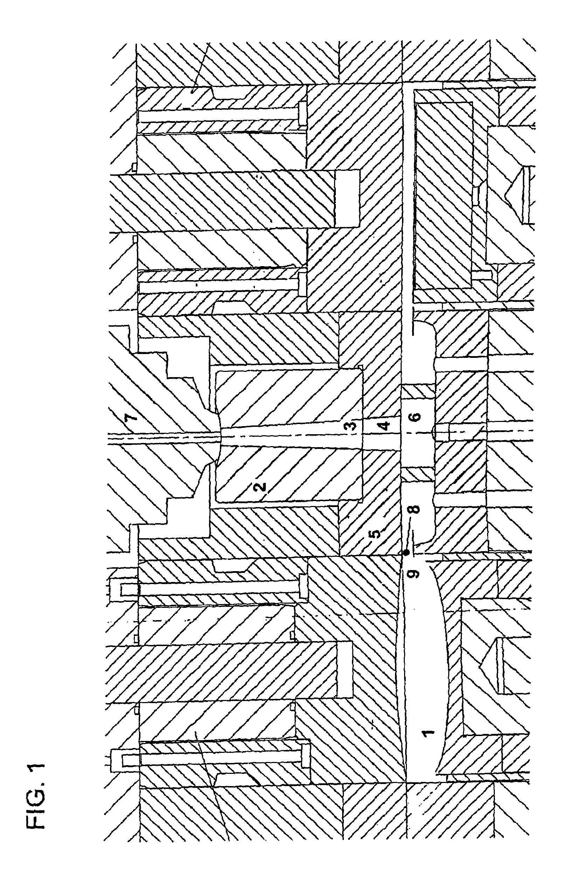

Fig. 1 eine Schnittansicht eines Abschnitts eines einen Angusskanalverteiler aufweisenden Spritzgießwerkzeuges im geschlossenen Zustand; und

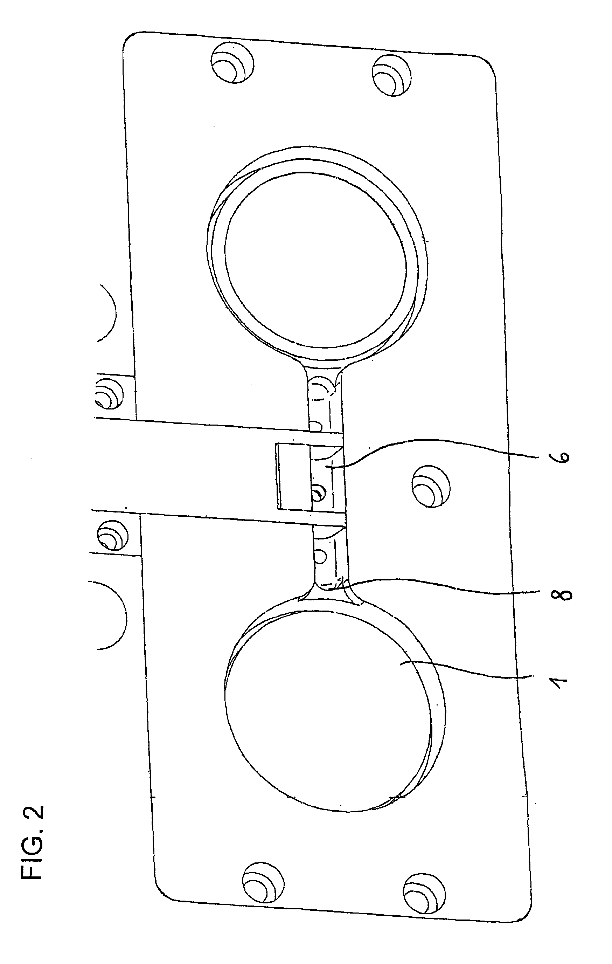

Fig. 2 eine perspektivische Draufsicht auf die offene Kavität des Spritzgießwerkzeuges der Fig. 1.

Das in der Zeichnung dargestellte Spritzgießwerkzeug dient der Herstellung transparenter Bauteile, und zwar optischer Linsen aus Kunststoff. Das Spritzgießwerkzeug besteht aus mehreren Komponenten, die eine das herzustellende Bauteil formende Kavität 1 begrenzen.

In dem dargestellten Ausführungsbeispiel umfasst das Spritzgießwerkzeug eine Angussbuchse 2, die einen konisch ausgebildeten Kanal 3 aufweist. Der Kanal 3 mündet in einen weiteren, ebenfalls konisch ausgebildeten Kanalabschnitt 4, der ein plattenförmiges Werkzeugteil 5 durchsetzt und in einen Angusskanalverteiler 6 mündet. Über den Angusskanalverteiler 6 wird Kunststoffschmelze, die aus einer Düse 7 einer eine Spritzgießschnecke oder eine andere Zufuhreinrichtung aufweisenden Spritzgießmaschine in die Angussbuchse gefördert wird, in die Kavität 1 geleitet. Bei dem Angusskanalverteiler 6 handelt es sich vorzugsweise um einen Kaltkanalverteiler.

Der Anschnitt 8 für die Schmelze ist am Rand der Kavität 1 angeordnet, so dass der Anschnitt 8 am Umfang und somit an einer Schmalseite 9 des kreisscheibenförmigen Kunststoff-Bauteils liegt. Durch die randseitige Anordnung des Anschnitts 8 an der Kavität 1 ist sichergestellt, dass die optische Funktion der Linse durch den Anschnitt nicht beeinträchtigt wird. Das Spritzgießwerkzeug ist so dimensioniert, dass der Durchmesser (Querschnitt) des Anschnitts 8 weniger als 50 %, insbesondere weniger als 35 % der maximalen Wanddicke des Kunststoff-Bauteils beträgt. In dem dargestellten Ausführungsbeispiel ist der Durchmesser des Anschnitts 8 so bemessen, dass er etwa 20%, d.h. ein Fünftel der Dicke der Wand 9 des Kunststoff-Bauteils beträgt.

Um trotz des vergleichsweise geringen Durchmessers des Anschnitts 8 eine lange Nachführung von Kunststoffschmelze in die Kavität 1 sicherzustellen, wird die Kunststoffschmelze durch gezieltes Einbringen von Ultraschall und/oder Wärmeenergie fließfähig gehalten.

Im Falle der Ultraschallbeaufschlagung werden eine oder mehrere Sonotroden so in das Werkzeug integriert, dass sie gerichtete Ultraschallwellen in die sich im Anguss (3, 4, 6, 8) befindliche Kunststoffschmelze abgeben. Beispielsweise werden hierzu der Angusskanalverteiler (Kaltkanalverteiler) 6 und/oder das plattenförmige Werkzeugteil 5, und vorzugsweise zusätzlich die Angussbuchse 2 als Sonotrode bzw. Sonotroden ausgeführt.

Alternativ dazu wird in den schmelzeführenden Bereich des Angusskanalverteilers (Kaltkanalverteilers) 6 und vorzugsweise zusätzlich in den schmelzeführenden Bereich der Angussbuchse 2 Ultraschall eingeleitet. Des Weiteren ist eine Einleitung in angussnahe Bereiche des Bauteils selber möglich.

Die gerichteten Ultraschallwellen werden von der im Anguss (3, 4, 6, 8) befindlichen Kunststoffschmelze absorbiert, wodurch deren Einfrierneigung abnimmt. Die am Anschnitt 8 befindliche Kunststoffschmelze wird auf diese Weise solange fließfähig gehalten, bis keine schmelzflüssige Seele mehr im Bauteil vorhanden ist. Die Siegelzeit ist somit nicht mehr abhängig vom Anguss, wie dies bei herkömmlichen Verfahren der Fall ist, sondern wird vom Bauteil selbst bestimmt.

In anderen Ausführungsformen wird die Sonotrode bzw. werden die Sonotroden durch eine Heizeinrichtung oder durch eine Kombination aus Sonotrode und Heizeinrichtung ersetzt.

Die erfindungsgemäße Vorrichtung weist eine die Sonotrode und/oder die Heizeinrichtung aktivierende Steuerung auf, die insbesondere einen Sensor umfassen kann, der die Fließfähigkeit der Schmelze erfasst. Die Sonotrode und/oder die Heizeinrichtung wird dabei in Abhängigkeit des Sensorsignals aktiviert bzw. deaktiviert. Alternativ oder zusätzlich zu diesem Sensor kann die Steuerung ein einstellbares Zeitglied umfassen, mittels dem eine Aktivierungsdauer der Sonotrode und/oder Heizeinrichtung vorgebbar ist.

Die Gesamtzykluszeit zur Herstellung des Kunststoff-Bauteils wird durch Anwendung des erfindungsgemäßen Verfahrens nicht verlängert, da der Anguss in der Restkühlzeit, also nach Ende der Nachdruckphase auf eine geeignete Entformungstemperatur abkühlt. Aufgrund der geringen Dicke (Querschnittsfläche) des Angusses kühlt der Anguss nach Ende der Nachdruckphase und damit nach Ende der Ultraschall- und/oder Wärmeeinleitung relativ schnell ab.

Das erfindungsgemäße Verfahren und die erfindungsgemäße Vorrichtung lassen sich besonders vorteilhaft zum Spritzgießen bzw. Spritzprägen von transparenten, optischen Bauteile aus Polycarbonaten, deren Blends sowie thermoplastischen Polyurethanen anwenden. Auch können mit dem erfindungsgemäßen Verfahren und der erfindungsgemäßen Vorrichtung entsprechende Bauteile aus PMMA, COC, COP, PA, PMMI, SAN und/oder PS mit hoher Geometrietreue kostengünstig hergestellt werden. Die Ausführung des erfindungsgemäßen Verfahrens ist nicht auf die vorgenannten Ausführungsbeispiele beschränkt. Ebenfalls ist sie nicht auf vorgenannten Kunststoffe beschränkt,vielmehr können alle transparenten bzw. transluzenten Kunststoffe sowie alle Kunststoffe, die für optische Bauteile genutzt werden können, nach dem erfindungsgemäßen Verfahren bzw. in der erfindungsgemäßen Vorrichtung verarbeitet werden.

## Patentansprüche

1. Verfahren zur Herstellung von Kunststoff-Bauteilen, insbesondere von optischen Linsen oder Lichtleitern, bei dem Kunststoffschmelze über einen Anguss (3, 4, 6, 8) in eine das Bauteil formende Kavität (1) eines Formwerkzeuges eingespritzt und zusätzliche Kunststoffschmelze zur Kompensation einer abkühlungsbedingten Volumenkontraktion der eingespritzten Kunststoffschmelze in die Kavität (1) nachgedrückt wird, **dadurch gekennzeichnet, dass**
die im Anguss (3, 4, 6, 8) befindliche Kunststoffschmelze mittels im Bereich des Anguss eingebrachter Energie solange fließfähig gehalten wird, bis die schmelzflüssige Seele des Kunststoff-Bauteils erstarrt ist.

2. Verfahren nach Anspruch 1,
**dadurch gekennzeichnet, dass** die die im Bereich des Anguss eingebrachte Energie mittels auf den Anguss gerichteter Ultraschallwellenaussendung eingebracht wird.

3. Verfahren nach Anspruch 1,
**dadurch gekennzeichnet, dass** die im Bereich des Anguss eingebrachte Energie mittels einer Heizeinrichtung eingebracht wird.

4. Verfahren nach Anspruch 1,
**dadurch gekennzeichnet, dass** die Energie mittels einer Kombination aus auf den Anguss gerichteter Ultraschallwellenaussendung und einer Heizeinrichtung eingebracht wird.

5. Verfahren nach einem der Ansprüche 1 bis 4,
**dadurch gekennzeichnet, dass** als Formwerkzeug ein Spritzgieß- oder Spritzgießprägewerkzeug verwendet wird, bei dem mindestens ein Anschnitt (8) an einer Seitenwand des herzustellenden Kunststoff-Bauteils liegt, und bei dem der Durchmesser des Angusses (3, 4, 6) oder des Anschnitts (8) weniger als 50%, vorzugsweise weniger als 35% und insbesondere weniger als 20 % der maximalen Wanddicke (9) des Kunststoff-Bauteils beträgt.

6. Verfahren nach einem der Ansprüche 1 bis 4,
**dadurch gekennzeichnet, dass** die Kunststoff-Bauteile aus einem oder mehreren Kunststoffstoffen ausgewählt aus der Gruppe enthaltend Polycarbonat, Copolycarbonat, thermoplastisches Polyurethan, Cycloolefin-Copolymer, Cycloolefin-Polymer, Polyamid, Styrol-Acrylnitril-Kunststoff, Polystyrol, Poly-N-Methylmethacrylimid, Polymethacryl-Säureester, Polymethacrylmethylimid und Polyacrylat, insbesondere Polymethylmethacrylat, oder Mischungen daraus spritzgegossen oder spritzgeprägt werden.

7. Anwendung des Verfahrens nach einem der Ansprüche 1 bis 6 zur Herstellung transparenter, optischer Bauteile, insbesondere von optischen Linsen oder Lichtleitern.

8. Vorrichtung zum Spritzgießen oder Spritzprägen von Kunststoff-Bauteilen, insbesondere von optischen Linsen oder Lichtleitern, umfassend eine Kavität (1) zur Formung des herzustellenden Kunststoff-Bauteils und eine Zufuhreinrichtung zur Zufuhr von Kunststoffschmelze über einen Anguss (3, 4, 6, 8) in die Kavität (1), **dadurch gekennzeichnet, dass** dem Anguss (3, 4, 6, 8) mindestens eine Sonotrode und/oder mindestens eine Heizeinrichtung zugeordnet ist, die auf den Anguss (3, 4, 6, 8) gerichtete Ultraschallwellen und/oder Wärme aussendet, so dass im Anguss (3, 4, 6, 8) befindliche Kunststoffschmelze solange fließfähig haltbar ist, bis die schmelzflüssige Seele des Kunststoff-Bauteils erstarrt ist, wobei eine die Sonotrode und/oder Heizeinrichtung aktivierende Steuerung vorhanden ist, die mittels eines Sensors die Fließfähigkeit der Schmelze erfasst, und/oder die ein einstellbares Zeitglied, mittels dem eine Aktivierungsdauer der Sonotrode bzw. der Heizeinrichtung vorgebbar ist, umfasst.

9. Vorrichtung nach Anspruch 8,
**dadurch gekennzeichnet, dass** der Anguss so ausgebildet ist, dass mindestens ein Anschnitt (8), an welchem der Anguss in die Kavität (1) mündet, an einer Schmalseite (9) des herzustellenden Kunststoff-Bauteils liegt, wobei der Durchmesser des Anschnitts (8) weniger als 50%, vorzugsweise weniger als 35% der maximalen Wanddicke (9) des Kunststoff-Bauteils beträgt.

10. Vorrichtung nach Anspruch 8 oder 9,
**dadurch gekennzeichnet, dass** dem Anschnitt (8), an welchem der Anguss (3, 4, 6) in die Kavität (1) mündet, mindestens eine Sonotrode zugeordnet ist, die auf den Anschnitt (8) gerichtete Ultraschallwellen aussendet.

11. Vorrichtung nach einem der Ansprüche 8 bis 10,
des Weiteren umfassend eine Angussbuchse (2), **dadurch gekennzeichnet, dass** der Angussbuchse (2) eine Sonotrode zur Einleitung von Ultraschall zugeordnet ist.

12. Vorrichtung nach einem der Ansprüche 8 bis 10,
des Weiteren umfassend eine Angussbuchse (2), **dadurch gekennzeichnet, dass** in der Angussbuchse (2) eine Sonotrode integriert ist.

13. Vorrichtung nach einem der Ansprüche 8 bis 12,
des Weiteren umfassend einen Angusskanalverteiler oder Kaltkanalverteiler (6), **dadurch gekennzeichnet, dass** in dem Angusskanalverteiler oder Kaltkanalverteiler (6) eine Sonotrode integriert ist.

14. Vorrichtung nach einem der Ansprüche 8 bis 12,
des Weiteren umfassend einen Angusskanalverteiler oder Kaltkanalverteiler (6), **dadurch gekennzeichnet, dass** dem Angusskanalverteiler oder Kaltkanalverteiler (6) eine Sonotrode zur Einleitung von Ultraschall zugeordnet ist.

15. Vorrichtung nach einem der Ansprüche 8 bis 14,
**dadurch gekennzeichnet, dass** die im Anguss befindliche Kunststoffschmelze alleinig oder zusätzlich durch im Bereich des Anguss mittels einer oder mehrerer Heizeinrichtungen eingebrachte Energie fließfähig gehalten wird.
